# EUROPEAN PATENT SPECIFICATION

(11) **EP 4 372 833 B1**
(45) Date of publication and mention of the grant of the patent: **30.10.2024**
(21) Application number: 22208678.7
(22) Date of filing: 21.11.2022
(51) Int. Cl.: H01M 4/04, H01M 4/133, H01M 4/38, H01M 4/583, H01M 4/587

(54) **METHOD OF FABRICATING A PRE-LITHIATED ELECTRODE AND LITHIUM-ION BATTERY CELL**
VERFAHREN ZUR HERSTELLUNG EINER VORLITHIIERTEN ELEKTRODE UND LITHIUM-IONEN-BATTERIEZELLE
PROCÉDÉ DE FABRICATION D'UNE ÉLECTRODE PRÉ-LITHIÉE ET ÉLÉMENT DE BATTERIE AU LITHIUM-ION

(43) Date of publication of application: 22.05.2024
(73) Proprietor: Lilium eAircraft GmbH, 82234 Wessling (DE)
(72) Inventor: Scheile, Felix, 80333 München (DE); Zünd, Tanja, 85658 Egmating (DE); Krafft, Roman, 72766 Reutlingen (DE); Ader, Armin, 86529 Schrobenhausen (DE); Rauen, Richard, 80337 München (DE)
(74) Representative: Grünecker Patent- und Rechtsanwälte PartG mbB

(56) References cited:
- WO-A1-2021/253318
- US-A1- 2022 052 307

## Description

### Field of the invention

The present invention is directed to a method of fabricating a pre-lithiated electrode and a lithium-ion battery cell comprising said pre-lithiated electrode.

### Background

Lithium (Li) ion batteries have played a role in the development of current generation mobile devices, microelectronics and electric vehicles. A typical Li-ion battery is made of a positive electrode (cathode), a negative electrode (anode), an electrolyte to conduct ions, a porous separator membrane, which is generally an electrical insulator, between the two electrodes to keep them physically apart, and a surrounding packaging.

The rapid advancement and complex requirements of the energy storage industry requires lithium-ion batteries with improved energy density and cycle life. The improved energy density can be achieved with anodes containing silicon or silicon oxide. The drawback of this material is a higher demand of lithium leading to reduced cycle life, i.e. less cyclable lithium. Reduced cyclable lithium results in a reduced usable cell capacity. The addition of lithium during lithium-ion battery production, known as pre-lithiation, is used to compensate for these lithium losses.

Various anode pre-lithiation methods exist including chemical pre-lithiation, electrochemical pre-lithiation, and stabilized lithium metal powder.

US 2022/0052307 A1 discloses an in-line contact pre-lithiation. Further, the application of thin lithium foil for direct contact pre-lithiation of anodes within lithium ion battery production is disclosed by Benedikt Stumper et al., Procedia CIRP 93(2020), 156-161.

The problem underlying the present invention is to provide an improved method for fabricating a pre-lithiated electrode and a lithium-ion battery cell comprising said pre-lithiated electrode, said method being industrially applicable and allowing efficient and homogeneous transfer of lithium to the electrode without compromising the quality of the electrode.

### Summary of the invention

The subject matter of the invention is as set out in the appended claims.

One aspect of the invention relates to a method of fabricating a pre-lithiated electrode, comprising:
disposing a Li-PET sheet comprising a layer of lithium metal adjacent to a prefabricated electrode comprising a layer of anode material;
contacting a surface of the layer of anode material with a surface of the layer of lithium metal; and
calendering the layer of lithium metal and the prefabricated electrode together,
said calendering comprising transferring the layer of lithium metal and the prefabricated electrode through a pair of calendering rolls,
said calendering further comprising applying uniform pressure to a back surface of the PET-sheet, wherein the uniform pressure is a pressure ranging from about 0.7 kN to about 0.8 kN,
wherein the front roll and/or the back roll is heated to a temperature in the range of from about 40°C to about 75°C, and
PET denotes polyethylene terephthalate or a derivative of polyethylene terephthalate.

A further aspect of the invention relates to a lithium-ion battery cell, comprising:
a pre-lithiated electrode formed according to the method according to the invention;
a positive electrode comprising oxides of a transition metal; and
an electrolyte, wherein the electrolyte is selected from a solid electrolyte, a liquid electrolyte, or a polymer electrolyte.

Preferred embodiments are set forth in the dependent claims.

In a preferred embodiment in combination with any of the above or below embodiments, said method further comprises separating the PET sheet from the surface of the layer of anode material to form the pre-lithiated electrode.

In a further preferred embodiment in combination with any of the above or below embodiments, the PET layer has a thickness of about 20 µm to about 200 µm, more preferably of about 30 µm to 80 µm, in particular about 50 µm.

In a further preferred embodiment in combination with any of the above or below embodiments, the PET layer further comprises a release layer.

In a further preferred embodiment in combination with any of the above or below embodiments, said release layer has a thickness of about 0.005 µm to about 2 µm.

In a further preferred embodiment in combination with any of the above or below embodiments, calendering the layer of lithium metal comprises applying uniform pressure to a back surface of the carrier substrate, wherein the uniform pressure is a pressure ranging from about 1.9 MPa to about 8.9 MPa, preferably from about 3.2 MPa to about 5.3 MPa (not according to the invention unless embraced by the claims).

Calendering the layer of lithium metal and the prefabricated electrode together comprises transferring the layer of lithium metal and the prefabricated electrode through a pair of calendering rolls.

In a further preferred embodiment in combination with any of the above or below embodiments, the method further comprises heating the front roll to a temperature in the range of from about 40°C to about 75°C, more preferably from about 60°C to about 70°C, in particular about 65°C.

In a further preferred embodiment in combination with any of the above or below embodiments, the method further comprises heating the back roll to a temperature in the range of from about 40°C to about 75°C, more preferably from about 60°C to about 70°C, in particular about 65°C.

In a further preferred embodiment in combination with any of the above or below embodiments, the prefabricated electrode is a negative electrode comprising a Cu carrier foil.

In a further preferred embodiment in combination with any of the above or below embodiments, said Cu carrier foil has a thickness of about 6 µm to about 12 µm, in particular about 8 µm.

In a further preferred embodiment in combination with any of the above or below embodiments, the prefabricated electrode is a negative electrode comprising a carbonaceous material, silicon, silicon oxide or combinations thereof.

In a further preferred embodiment in combination with any of the above or below embodiments, the carbonaceous material is selected from natural graphite, artificial graphite, or combinations thereof.

In a further preferred embodiment in combination with any of the above or below embodiments, the prefabricated electrode is a negative electrode having a coating, said coating preferably comprising SiO_{y}C_{z}, wherein y is from 0 to 2 and z is 0 or 1.

In a further preferred embodiment in combination with any of the above or below embodiments, the coating is a double-sided coating.

In a further preferred embodiment in combination with any of the above or below embodiments, the coating has a thickness of about 10 µm to about 80 µm.

In a further preferred embodiment in combination with any of the above or below embodiments, the layer of lithium metal has a thickness from about 3 µm to about 15 µm, more preferably from about 6 µm to about 12 µm, in particular about 9.3 µm. The lithium layer needs to be passivated, preferably by CO₂.

In a further preferred embodiment in combination with any of the above or below embodiments, the gap between the calendering rolls is from about 160 µm to about 200 µm, preferably from about 170 µm to about 190 µm, more preferably about 180 µm.

Alternatively, the pressure applied to the back surface of the carrier substrate can be defined in kN. Calendering the layer of lithium metal comprises applying uniform pressure to a back surface of the carrier substrate, wherein the uniform pressure is a pressure ranging from about 0.7 kN to about 0.8 kN, preferably about 0.75 kN.

In a further preferred embodiment in combination with any of the above or below embodiments, the method further comprises incorporating the pre-lithiated electrode into an electrochemical cell further comprising a positive electrode, a separator, and an electrolyte.

A further aspect of the invention relates to a lithium-ion battery cell, comprising:
- a pre-lithiated electrode formed according to the method according to the invention;
- a positive electrode comprising oxides of a metal, preferably a transition metal; and
- an electrolyte, wherein the electrolyte is selected from a solid electrolyte, a liquid electrolyte, or a polymer electrolyte.

In a further preferred embodiment in combination with any of the above or below embodiments, each of the pre-lithiated electrode and the positive electrode are in a fully charged position.

In a further preferred embodiment in combination with any of the above or below embodiments, each of the pre-lithiated electrode and the positive electrode are in a partially charged position.

In a further preferred embodiment in combination with any of the above or below embodiments, the pre-lithiated electrode is completely lithiated in the fully charged position and the positive electrode is completely delithiated in the fully charged position.

The present specification is not limited to the use of a Li-PET sheet, although only the use of a Li-PET sheet is embraced by the claims. In more general terms, the present specification therefore discloses a method of fabricating a pre-lithiated electrode, comprising:
- disposing a carrier substrate comprising a layer of lithium metal adjacent to a prefabricated electrode comprising a layer of anode material;
- contacting a surface of the layer of anode material with a surface of the layer of lithium metal; and
- calendering the layer of lithium metal and the prefabricated electrode together.

In a preferred embodiment in combination with any of the above or below embodiments, the carrier substrate is a PET substrate.

In a further preferred embodiment in combination with any of the above or below embodiments, the carrier substrate is a sheet. The preferred embodiments set out above for claimed method including the use of a Li-PET sheet are also applicable to the method including the use of a carrier substrate.

In a preferred embodiment in combination with any of the above or below embodiments, the method is implemented as a roll-to-roll process. The term "sheet" as used herein is intended to designate a flexible material to which lithium is applied. The term is not limited to a specific geometrical shape, such as a layer, but also includes material that is wound into a roll.

### Brief description of the drawings

Figure 1 illustrates a material flow according to an aspect of the present invention.
Figure 2 depicts steps 1 to 3 of 9 of the pre-lithiation procedure according to an aspect of the present invention.
Figure 3 depicts steps 4 and 5 of 9 of the pre-lithiation procedure according to an aspect of the present invention.
Figure 4 depicts steps 6 and 7 of 9 of the pre-lithiation procedure according to an aspect of the present invention.
Figure 5 depicts steps 8 and 9 of 9 of the pre-lithiation procedure according to an aspect of the present invention.
Figure 6 depicts the adjustment of pressure/temperature in step 4 of the pre-lithiation procedure according to an aspect of the present invention.
Figure 7 depicts pictures relating to table in Figure 6 showing different levels of homogeneity in application of lithium.
Figure 8 shows effects of applied pressure on the deviation of thickness, width and length of the electrode at room temperature. Commas within numeral labels in Figure 8 should be interpreted as decimal points.

### Detailed description

The following describes the claimed method of fabricating a pre-lithiated electrode and the claimed lithium-ion battery cell.

Certain details are set forth in the following description and in the Figures to provide a thorough understanding of various implementations of the invention. Other details describing well-known structures and systems often associated with electrochemical cells and batteries are not set forth in the following to avoid unnecessarily obscuring the description of the various implementations.

Many of the details, dimensions, angles and other features shown in the Figures are merely illustrative of particular implementations. Accordingly, other implementations can have other details, components, dimensions, angles and features without departing from the scope of the present invention.

As used herein, each of the terms "comprising', "having" and "containing", including grammatical variants thereof, are meant in a non-exhaustive sense to mean "including", but not necessarily "composed of", and does not exclude elements in addition to those explicitly recited as being present. As used herein, then, the terms "comprising", "having" and "containing", and grammatical variants thereof, indicate that components other than those explicitly recited may, but need not, be present. As such these terms include as a limiting case embodiments in which no other elements than those recited are present, e.g. in the commonly accepted sense of "consisting of".

As used herein, the phrase "consisting of", and grammatically related variants thereof, means that no other elements are present in those recited. In standing with the above definition of "comprising" (and grammatically and semantically related terms), the term "consisting of" therefore denotes a limiting scenario within the meaning of "comprising".

As used herein, the term "PET" denotes the known polymeric material polyethylene terephthalate. The term "PET" also includes a derivative of PET.

In more general terms, the PET or the derivative of PET can be replaced by a carrier substrate, provided that the carrier substrate is flexible and ensures the adhesion of the lithium layer and its release under pressure, ensures the adhesion of the release layer, is chemically inert with respect to the release layer and lithium, and is stable under pressure in the selected pressure range.

Unless defined otherwise, any feature within any aspect or embodiment of the invention may be combined with any feature within any other aspect or embodiment of the invention, and the skilled person understands such combination as being encompassed in the original disclosure of the present application. This applies in particular to all embodiments described within the section relating to the method of fabricating a pre-lithiated electrode *per se*, in respect of other aspects, e.g. the lithium-ion battery cell. This also applies in particular, but not exclusively, to endpoints of ranges disclosed herein.

As used herein the term "about" when referring to a particular value, e.g. an endpoint or endpoints of a range, encompasses and discloses, in addition to the specifically recited value itself, a certain variation around the specifically recited value. Such a variation may for example arise from normal measurement variability. The term "about" shall be understood as encompassing and disclosing a range of variability above and below an indicated specific value, said percentage values being relative to the specific recited value itself, as follows. The term "about" may denote variability of ± 5.0%. The term "about" may denote variability of ± 4.0%. The term "about" may denote variability of ± 3.0%. The term "about" may denote variability of ± 2.0%. The term "about" may denote variability of ± 1.0%. The term "about", in reference to the particular recited value, may denote that exact particular value itself, irrespective of any explicit mention that this exact particular value is included; even in the absence of an explicit indication that the term "about" includes the particular exact recited value, this exact particular value is still included in the range of variation created by the term "about", and is therefore disclosed.

Implementations described herein will be described below in reference to a roll-to-roll coating system. It should also be understood that although described as a roll-to-roll process, the implementations described herein can be performed on discrete substrates.

The pre-lithiation method described herein is applicable to Li-ion batteries using solid electrolytes (e.g., solid-state batteries) as well as Li-ion batteries, which use liquid or polymer electrolytes.

The claimed method involves the pre-lithiation of anode materials with a lithium coated substrate, preferably PET, by way of direct contact. Direct contact is an effective way to pre-lithiate the anode material as this creates excellent surface contact between the lithium and the anode layer. The method described herein can be slotted into current battery production lines.

The carrier substrate for lithium, preferably PET, is a flexible substrate, which can be used in roll-to-roll coating.

The calender rolls must be about 100% cylindrical to ensure uniform pressure distribution. Uniform pressure distribution means a pressure distribution on the surface of no more than +/-5%. The front roll is the roll that points to the subsequent process and the back roll is the roll that points away from the subsequent process.

In a roll-to-roll process, roll is defined as coiled strip material. During the process run, the unwound material is in the process as a strip and can then be separated directly into electrodes or rewound as a roll. This roll can have a cyclindrical or substantially cyclindrical shape.

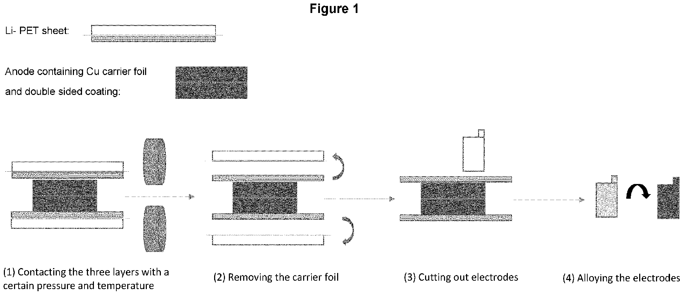

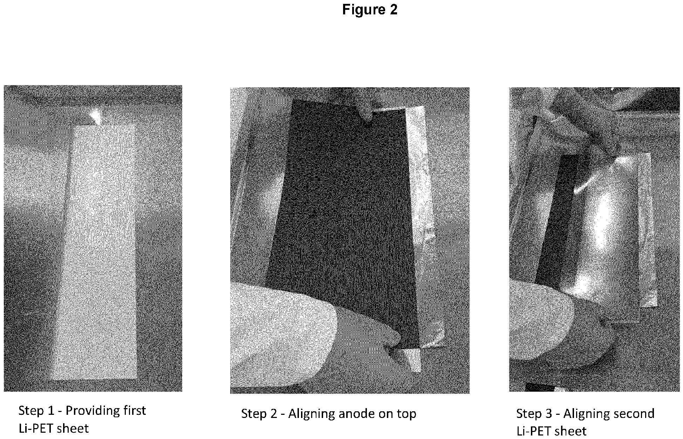

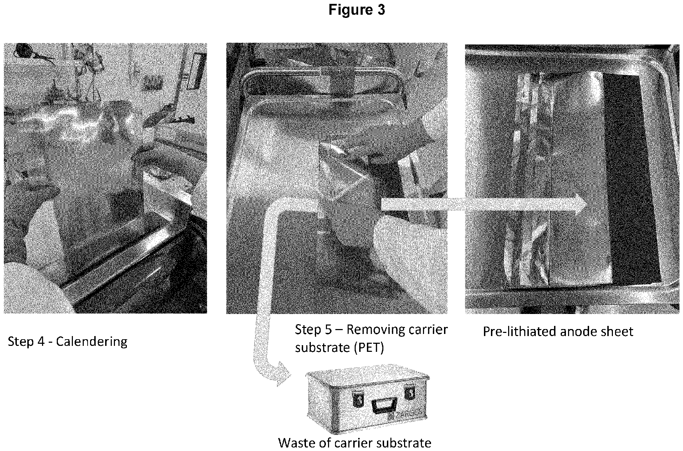

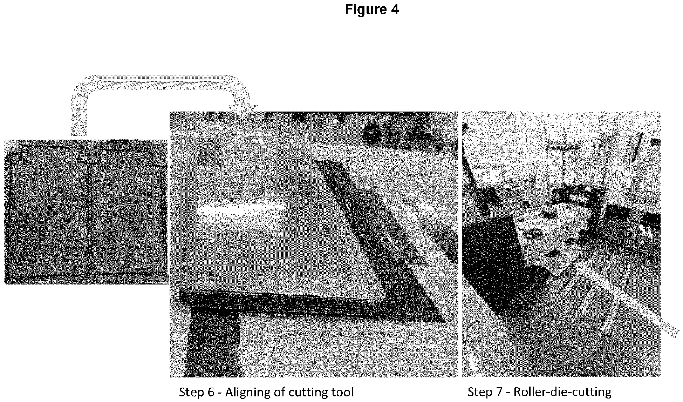

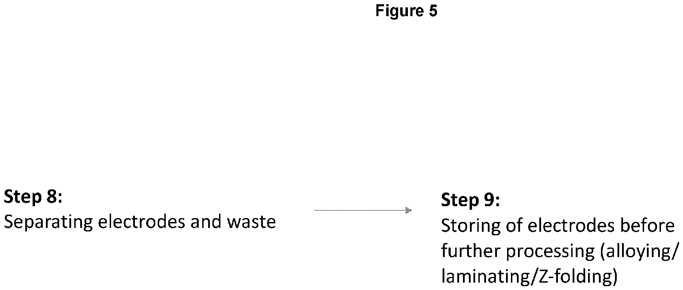

Figures 1 illustrates a material flow according to the invention. This material flow is further illustrated by pictures in Figures 2 to 5. The material flow in Figure 1 can be correlated to the pictures in Figures 2 to 5 as follows:
- Step (1) in Figure 1 shows steps 1 to 4 in Figures 2 and 3 in condensed form;
- Step (2) in Figure 1 corresponds to step 5 in Figure 3;
- Step (3) in Figure 1 shows steps 6 and 7 in Figure 4 in condensed form; and
- Step (4) in Figure 1 shows steps 8 and 9 in Figure 5 in condensed form.

As shown in Figure 1, the Li-PET sheet is pressed to an anode, which is preferably a Cu carrier foil having a double-sided coating containing SiO_{y}C_{z}, wherein y is 0-2 and z is 0 or 1. Figure 1 shows
(1) Contacting the three layers with a certain pressure and temperature,
(2) Removing the carrier foil,
(3) Cutting out electrodes, and
(4) Alloying the electrodes.

The steps (1) and (4) of Figure 1 must be adjusted to achieve the following goals:
- The carrier PET foil can be removed according to step (2) of Figure 1 while ensuring a homogeneous transfer of lithium to the anode;
- The applied pressure in step (1) of Figure 1 does not lead to
   ∘ A compression of the anode material itself, or
   ∘ A deformation of the PET foil;
- The applied temperature in step (1) does not lead to any decomposition reaction on the anode;
- The step (4) of alloying the electrodes is slow enough to be of no risk for the production, to be homogeneous and to allow the cutting of the electrode before the material gets brittle; and
- The step (4) of alloying the electrodes is fast enough to remove elemental lithium from the anode surface to allow the follow up processing of the electrode (laminating).

Figures 2 to 5 further illustrate the material flow according to Figure 1 as described above.

Figure 2 show the provision of a first Li-PET sheet (step 1), the aligning of an anode on top of said first Li-PET sheet (step 2), and the aligning of a second Li-PET sheet on top of the anode to achieve a three-layered structure of Li-PET sheet/anode/Li-PET sheet (step 3).

Figure 3 shows the calendering of the three-layered structure of Li-PET sheet/anode/Li-PET sheet of Figure 2 (step 4) and the removal of the carrier substrate (PET) to obtain a pre-lithiated anode sheet (step 5).

The calendering of the three-layered structure of Li-PET sheet/anode/Li-PET sheet according to step 4 is preferably carried out with a front roll having a temperature in the range of from about 40°C to about 75°C, more preferably from about 60°C to about 70°C, and in particular about 65°C, and a back roll having preferably a temperature in the range of from about 40°C to about 75°C, more preferably from about 60°C to about 70°C, and in particular about 65°C. A homogeneous transfer of lithium can, however, also be achieved at room temperature, as discussed below. The friction between the calendering rolls can be within the range of about +/- 2%. The sheet is preferably processed through the calendering rolls at a speed that ensures a homogeneous temperature of +/- 2 °C. The sheet is therefore preferably processed at a speed of about 0.1-5 m/min, more preferably at a speed of about 2 m/min. Alternatively or in addition, the sheet may be pre-heated. Step 4 further preferably comprises applying uniform pressure to a back surface of the carrier substrate, wherein the uniform pressure is a pressure ranging from about 1.9 MPa to about 8.9 MPa, preferably from about 3.2 MPa to about 5.3 MPa (not according to the invention unless embraced by the claims). The gap between the calendering rolls in step 4 is preferably from about 160 µm to about 200 µm, more preferably from about 170 µm to about 190 µm, and in particular about 180 µm.

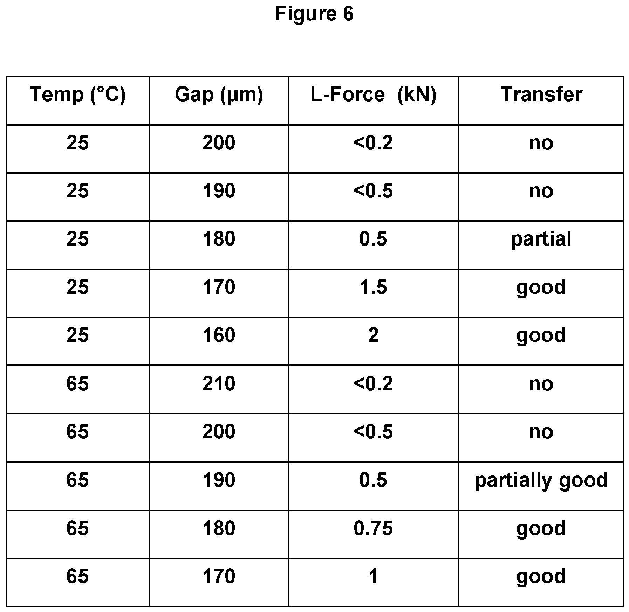

The technical effect of the different parameters temperature, gap and pressure, and their interrelation is further illustrated in Figure 6. The experiments shown in Figure 6 aim to achieve complete lithium transfer while keeping the line force as low as possible to avoid any potential damage to the anode material itself, e.g., loss of porosity and thus performance, and to avoid a deformation of the PET foil. It should be understood that the temperature and the gap determine the pressure (expressed as L-force (kN) in Figure 6).

The table in Figure 6 shows five experiments at a temperature of 25°C with decreasing gap widths of 200 µm, 190 µm, 180 µm, 170 µm and 160 µm. The selected temperature and gap widths led to increasing L-forces of < 0.2 kN, < 0.5 kN, 0.5 kN, 1.5 kN and 2 kN, respectively. Thus, lower gap widths are associated with higher pressures. The column under the heading "Transfer" in Figure 6 evaluates the transfer of lithium to the anode material. There was no transfer at L-forces of < 0.2 kN or < 0.5 kN. There was a partial transfer at an L-force of 0.5 kN. There was a good transfer at L-forces of 1.5 and 2 kN (not according to the invention unless embraced by the claims).

The table in Figure 6 further shows five experiments at a temperature of 25°C with decreasing gap widths of 210 µm, 200 µm, 190 µm, 180 µm, and 170 µm. The selected temperature and gap widths led to L-forces of < 0.2 kN, < 0.5 kN, 0.5 kN, 0.75 kN and 1 kN, respectively. There was no transfer at L-forces of < 0.2 kN or < 0.5 kN. There was a partial transfer at an L-force of 0.5 kN. There was a good transfer at L-forces of 0.75 and 1 kN (not according to the invention unless embraced by the claims).

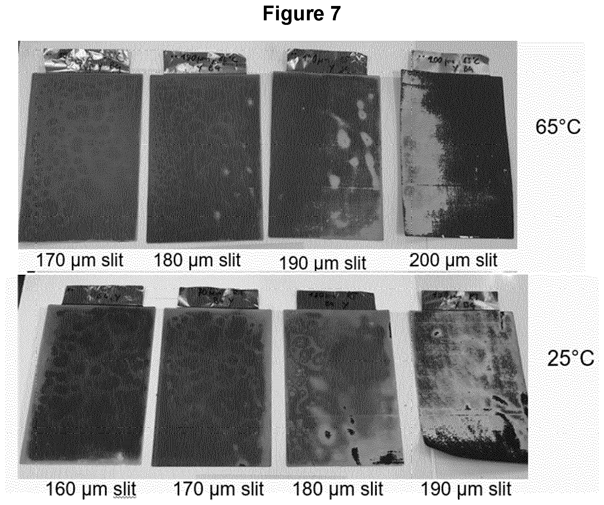

A good transfer of lithium to the anode material is characterized by a high level of homogeneity in the application of lithium, as can be taken from Figure 7. The pictures in Figure 7 reveal that the application is homogeneous for experiments conducted at 25°C with 160 or 170 µm slit (i.e. gap width) or at 65°C with 170 or 180 µm slit (not according to the invention unless embraced by the claims). The experiments demonstrate that the higher the temperature, the lower the pressure required for good transfer.

The experiments shown in Figures 6 and 7 were also carried out at temperatures of 40°C, 70°C, and 80°C. 80°C yielded no transfer at all for the applied gaps and the results at 70°C were not as good as the results at 65°C. Further, the results at 40°C lay between the results at 25°C and at 65°C.

The data in the table of Figure 6 thus reveals a trend, i.e. the higher the temperature, the lower the pressure needed for good lithium transfer. While four experiments were evaluated to achieve "good" transfer of lithium, such "good" transfer can be achieved e.g. by applying an L-force of only about 0.75 kN at a temperature of about 65°C. This a surprisingly good result. Both a higher temperature of 70°C and a lower temperature of 40°C led to less desirable results, as described above.

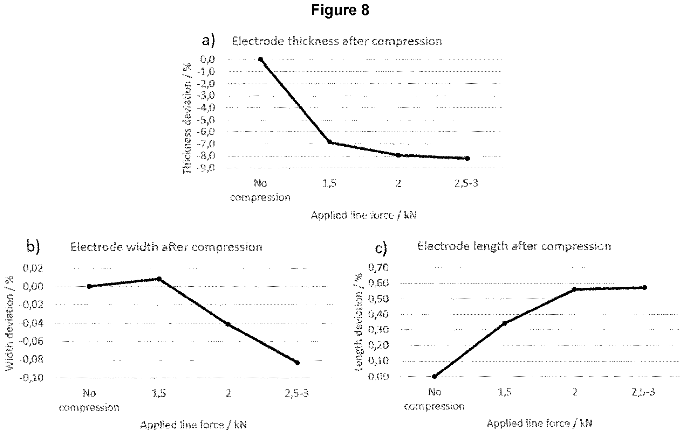

Figure 8 shows effects of applied pressure on the deviation of thickness, width and length of the electrode at room temperature.

The first graph shows the electrode compression in terms of thickness deviation in %.

The second graph shows the electrode width in terms of width deviation in %.

The third graph shows the electrode length in terms of length deviation in %.

As shown in Figure 8, the effect of compression on the length, width and thickness of the electrode at room temperature is exemplified. The aim is to change the electrode as little as possible. It was found that the width of the electrode remains unchanged by compression up to a pressure of 1.5 kN and then decreases, i.e. is constricted. The length and thickness of the electrode change proportionally to the contact pressure. Therefore, it could be determined that a contact pressure of 1.5 kN causes the fewest geometric changes on the electrode.

As shown in Figure 6, the pressure can be further reduced by applying the lithium foil at higher temperatures. This reduces the deformation of the electrode, which does not change the properties of the electrode despite pre-lithiation.

Thus, an optimal combination of temperature and pressure respectively gap of the calendering rolls was found to achieve a pre-lithiation process reducing the anode compression, ensuring good application of the lithium foil.

The pre-lithiated anode sheet obtained in step 5 of Figure 3 is preferably stored for no more than 3 hours before cutting according to step 7 of Figure 4 (see below) at a temperature in the range from 5 to 20°C, preferably from 5 to 10°C. The storage time of no more than 3 hours is calculated from step 4 of Figure 3.

Figure 4 shows the aligning of a cutting tool to the pre-lithiated anode sheet of Figure 3 (step 6) and the subsequent roller-die-cutting (step 7). The step of cutting is not limited to roller-die-cutting and can be effected by any other suitable cutting technique.

Figure 5 shows the step of separating electrodes and waste (step 8) and the step of storing the electrodes before further processing (such as alloying/laminating/Z-folding) (step 9).

The alloying time in a step of alloying the electrode is generally in the range from 12 to 72 hours and is preferably in the range from 18 to 28 hours. The alloying temperature can be in the range from 20 to 60°C and is preferably at about room temperature, as more side reactions occur with higher temperatures. The alloying atmosphere can be a dry room (having a dew point of about -50°C) or a CO₂ atmosphere. The alloying atmosphere should not be any of argon (Ar), nitrogen (N₂) or vaccum, as such an atmosphere would entail too many side reactions.

Summarizing the above, the present inventors have surprisingly found a method of fabricating a pre-lithiated electrode that is industrially applicable, allowing an efficient homogeneous transfer of lithium to an anode material without compressing the anode material or leading to any decomposition reaction on the anode. The pre-lithiated electrode can be used as part of a high performance lithium-ion battery cell, which requires high electric current and high energy density.

## Claims

1. A method of fabricating a pre-lithiated electrode, comprising:
disposing a Li-PET sheet comprising a layer of lithium metal adjacent to a prefabricated electrode comprising a layer of anode material;
contacting a surface of the layer of anode material with a surface of the layer of lithium metal; and
calendering the layer of lithium metal and the prefabricated electrode together,
said calendering comprising transferring the layer of lithium metal and the prefabricated electrode through a pair of calendering rolls,
said calendering further comprising applying uniform pressure to a back surface of the PET-sheet, wherein the uniform pressure is a pressure ranging from about 0.7 kN to about 0.8 kN,
wherein the front roll and/or the back roll is heated to a temperature in the range of from about 40°C to about 75°C, and
PET denotes polyethylene terephthalate or a derivative of polyethylene terephthalate.

2. The method according to claim 1, further comprising:
separating the PET sheet from the surface of the layer of anode material to form the pre-lithiated electrode, wherein the PET layer preferably has a thickness of about 20 µm to about 200 µm.

3. The method according to claim 1 or claim 2, wherein the PET layer further comprises a release layer, said release layer preferably having a thickness of about 0.005 µm to about 1 µm.

4. The method according to any one of claims 1 to 3, further comprising heating the front roll to a temperature in the range of from about 40°C to about 75°C, preferably from about 60°C to about 70°C, in particular about 65°C.

5. The method according to any one of claims 1 to 4, further comprising heating the back roll to a temperature in the range of from about 40°C to about 75°C, preferably from about 60°C to about 70°C, in particular about 65°C.

6. The method according to any one of claims 1 to 5, wherein the prefabricated electrode is a negative electrode comprising a Cu carrier foil, said Cu carrier foil preferably having a thickness of about 6 µm to about 12 µm.

7. The method according to any one of claims 1 to 6, wherein the prefabricated electrode is a negative electrode comprising a carbonaceous material, silicon, silicon oxide or combinations thereof, said carbonaceous material preferably being selected from natural graphite, artificial graphite, or combinations thereof.

8. The method according to any one of claims 1 to 7, wherein the prefabricated electrode is a negative electrode having a coating, said coating preferably comprising SiO_{y}C_{z}, wherein y is from 0 to 2 and z is 0 or 1.

9. The method according to claim 8, wherein the coating is a double-sided coating and/or has a thickness of about 10 µm to about 80 µm.

10. The method according to any one of claims 1 to 9, wherein the gap between the calendering rolls is from about 160 µm to about 200 µm, preferably from about 170 µm to about 190 µm, more preferably about 180 µm.

11. The method according to any one of claims 1 to 10, further comprising incorporating the pre-lithiated electrode into an electrochemical cell further comprising a positive electrode, a separator, and an electrolyte.

12. A lithium-ion battery cell, comprising:
a pre-lithiated electrode formed according to the method according to any one of claims 1 to 11;
a positive electrode comprising oxides of a transition metal; and
an electrolyte, wherein the electrolyte is selected from a solid electrolyte, a liquid electrolyte, or a polymer electrolyte.

13. The lithium-ion battery cell according to claim 12, wherein each of the pre-lithiated electrode and the positive electrode are in a fully charged position, preferably wherein the pre-lithiated electrode is completely lithiated in the fully charged position and the positive electrode is completely delithiated in the fully charged position.

## Patentansprüche

1. Verfahren zur Herstellung einer vorlithiierten Elektrode, umfassend:
Anordnen einer Li-PET-Folie, die eine Schicht aus Lithiummetall umfasst, neben einer vorgefertigten Elektrode, die eine Schicht aus Anodenmaterial umfasst;
Inkontaktbringen einer Oberfläche der Schicht aus Anodenmaterial mit einer Oberfläche der Schicht aus Lithiummetall; und
Kalandrieren der Lithiummetallschicht und der vorgefertigten Elektrode miteinander,
wobei das Kalandrieren das Überführen der Lithiummetallschicht und der vorgefertigten Elektrode durch ein Paar Kalanderwalzen umfasst,
wobei das Kalandrieren ferner das Aufbringen eines gleichmäßigen Drucks auf eine Rückseite der PET-Folie umfasst, wobei der gleichmäßige Druck ein Druck im Bereich von etwa 0,7 kN bis etwa 0,8 kN ist,
wobei die vordere Walze und/oder die hintere Walze auf eine Temperatur im Bereich von etwa 40°C bis etwa 75°C erhitzt wird, und
PET für Polyethylenterephthalat oder ein Derivat von Polyethylenterephthalat steht.

2. Das Verfahren nach Anspruch 1, ferner umfassend:
Trennen der PET-Folie von der Oberfläche der Schicht aus Anodenmaterial, um die vorlithiierte Elektrode zu bilden, wobei die PET-Schicht vorzugsweise eine Dicke von etwa 20 µm bis etwa 200 µm aufweist.

3. Das Verfahren nach Anspruch 1 oder 2, wobei die PET-Schicht ferner eine Trennschicht umfasst, wobei die Trennschicht vorzugsweise eine Dicke von etwa 0,005 µm bis etwa 1 µm aufweist.

4. Das Verfahren nach einem der Ansprüche 1 bis 3, ferner umfassend das Erhitzen der vorderen Walze auf eine Temperatur im Bereich von etwa 40°C bis etwa 75°C, vorzugsweise von etwa 60°C bis etwa 70°C, insbesondere etwa 65°C.

5. Das Verfahren nach einem der Ansprüche 1 bis 4, ferner umfassend das Erhitzen der hinteren Walze auf eine Temperatur im Bereich von etwa 40°C bis etwa 75°C, vorzugsweise von etwa 60°C bis etwa 70°C, insbesondere etwa 65°C.

6. Das Verfahren nach einem der Ansprüche 1 bis 5, wobei die vorgefertigte Elektrode eine negative Elektrode ist, die eine Cu-Trägerfolie umfasst, wobei die Cu-Trägerfolie vorzugsweise eine Dicke von etwa 6 µm bis etwa 12 µm aufweist.

7. Das Verfahren nach einem der Ansprüche 1 bis 6, wobei die vorgefertigte Elektrode eine negative Elektrode ist, die ein kohlenstoffhaltiges Material, Silizium, Siliziumoxid oder Kombinationen davon umfasst, wobei das kohlenstoffhaltige Material vorzugsweise aus natürlichem Graphit, künstlichem Graphit oder Kombinationen davon ausgewählt ist.

8. Das Verfahren nach einem der Ansprüche 1 bis 7, wobei die vorgefertigte Elektrode eine negative Elektrode mit einer Beschichtung ist, wobei die Beschichtung vorzugsweise SiO_{y}C_{z} umfasst, wobei y 0 bis 2 und z 0 oder 1 ist.

9. Das Verfahren nach Anspruch 8, wobei die Beschichtung eine doppelseitige Beschichtung ist und/oder eine Dicke von etwa 10 µm bis etwa 80 µm aufweist.

10. Das Verfahren nach einem der Ansprüche 1 bis 9, wobei der Spalt zwischen den Kalanderwalzen etwa 160 µm bis etwa 200 µm, vorzugsweise etwa 170 µm bis etwa 190 µm, besonders bevorzugt etwa 180 µm beträgt.

11. Das Verfahren nach einem der Ansprüche 1 bis 10, ferner umfassend den Einbau der vorlithiierten Elektrode in eine elektrochemische Zelle, die außerdem eine positive Elektrode, einen Separator und einen Elektrolyten umfasst.

12. Lithium-Ionen-Batteriezelle, umfassend:
eine vorlithiierte Elektrode, die nach dem Verfahren gemäß einem der Ansprüche 1 bis 11 hergestellt wurde;
eine positive Elektrode umfassend Oxide eines Übergangsmetalls; und
einen Elektrolyten, wobei der Elektrolyt aus einem festen Elektrolyten, einem flüssigen Elektrolyten oder einem Polymerelektrolyten ausgewählt ist.

13. Die Lithium-lonen-Batteriezelle nach Anspruch 12, wobei sich sowohl die vorlithiierte Elektrode als auch die positive Elektrode in einer voll geladenen Position befinden, vorzugsweise wobei die vorlithiierte Elektrode in der voll geladenen Position vollständig lithiiert ist und die positive Elektrode in der voll geladenen Position vollständig delithiiert ist.

## Revendications

1. Procédé de fabrication d'une électrode pré-lithiée, comprenant :
la disposition d'une feuille de Li-PET comprenant une couche de lithium métallique adjacente à une électrode préfabriquée comprenant une couche de matériau anodique ;
la mise en contact d'une surface de la couche de matériau anodique avec une surface de la couche de lithium métallique ; et
le calandrage de la couche de lithium métallique avec l'électrode préfabriquée,
ledit calandrage comprenant le transfert de la couche de lithium métallique et de l'électrode préfabriquée à travers une paire de cylindres de calandrage,
ledit calandrage comprenant en outre l'application d'une pression uniforme sur une surface arrière de la feuille de PET, où la pression uniforme est une pression allant d'environ 0,7 KN à environ 0,8 kN,
où le rouleau avant et/ou le rouleau arrière sont chauffés à une température comprise entre environ 40°C et environ 75°C, et
PET désigne le polyéthylène téréphtalate ou un dérivé du polyéthylène téréphtalate.

2. Procédé selon la revendication 1, comprenant en outre :
la séparation de la feuille de PET de la surface de la couche de matériau anodique pour former l'électrode pré-lithiée, où la couche de PET présente de préférence une épaisseur d'environ 20 µm à environ 200 µm.

3. Procédé selon la revendication 1 ou la revendication 2, où la couche de PET comprend en outre une couche de libération, ladite couche de libération ayant de préférence une épaisseur d'environ 0,005 µm à environ 1 µm.

4. Procédé selon l'une quelconque des revendications 1 à 3, comprenant en outre le chauffage du rouleau frontal à une température comprise entre environ 40°C et environ 75°C, de préférence entre environ 60°C et environ 70°C, en particulier environ 65°C.

5. Procédé selon l'une quelconque des revendications 1 à 4, comprenant en outre le chauffage du rouleau arrière à une température comprise entre environ 40°C et environ 75°C, de préférence entre environ 60°C et environ 70°C, en particulier environ 65°C.

6. Procédé selon l'une quelconque des revendications 1 à 5, où l'électrode préfabriquée est une électrode négative comprenant une feuille de support en Cu, ladite feuille de support en Cu ayant de préférence une épaisseur d'environ 6 µm à environ 12 µm.

7. Procédé selon l'une quelconque des revendications 1 à 6, où l'électrode préfabriquée est une électrode négative comprenant un matériau carboné, du silicium, de l'oxyde de silicium ou des combinaisons de ceux-ci, ledit matériau carboné étant de préférence choisi parmi le graphite naturel, le graphite artificiel ou des combinaisons de ceux-ci.

8. Procédé selon l'une quelconque des revendications 1 à 7, où l'électrode préfabriquée est une électrode négative présentant un revêtement, ledit revêtement comprenant de préférence SiOyCz, où y est compris entre 0 et 2 et z est égal à 0 ou 1.

9. Procédé selon la revendication 8, où le revêtement est un revêtement double face et/ou présente une épaisseur d'environ 10 µm à environ 80 µm.

10. Procédé selon l'une quelconque des revendications 1 à 9, où l'écart entre les rouleaux de calandrage est d'environ 160 µm à environ 200 µm, de préférence d'environ 170 µm à environ 190 µm, plus préférablement d'environ 180 µm.

11. Procédé selon l'une quelconque des revendications 1 à 10, comprenant en outre l'incorporation de l'électrode pré-lithiée dans une cellule électrochimique comprenant une électrode positive, un séparateur et un électrolyte.

12. Cellule de batterie lithium-ion, comprenant :
une électrode pré-lithiée formée selon le procédé selon l'une quelconque des revendications 1 à 11 ;
une électrode positive comprenant des oxydes d'un métal de transition ; et
un électrolyte, où l'électrolyte est choisi parmi un électrolyte solide, un électrolyte liquide ou un électrolyte polymère.

13. Cellule de batterie lithium-ion selon la revendication 12, où l'électrode pré-lithiée et l'électrode positive sont chacune en position de charge complète, de préférence où l'électrode pré-lithiée est complètement lithiée en position de charge complète et où l'électrode positive est complètement dé-lithiée en position de charge complète.
